# EUROPEAN PATENT SPECIFICATION

(11) **EP 4 257 951 B1**
(45) Date of publication and mention of the grant of the patent: **09.07.2025**
(21) Application number: 22166526.8
(22) Date of filing: 04.04.2022
(51) Int. Cl.: G01N 17/02, G06N 3/02

(54) **CORROSION ESTIMATING METHOD FOR A VEHICLE**
KORROSIONSSCHÄTZVERFAHREN FÜR EIN FAHRZEUG
PROCÉDÉ D'ESTIMATION DE LA CORROSION D'UN VÉHICULE

(43) Date of publication of application: 11.10.2023
(73) Proprietor: TOYOTA JIDOSHA KABUSHIKI KAISHA, Toyota-shi, Aichi-ken, 471-8571 (JP)
(72) Inventor: VECCHI, Lorenzo, 1140 BRUSSELS (BE)
(74) Representative: Cabinet Beau de Loménie

(56) References cited:
- US-B2- 10 750 472
- SONG XIAOXIAO ET AL: "Multi-factor mining and corrosion rate prediction model construction of carbon steel under dynamic atmospheric corrosion environment", ENGINEERING FAILURE ANALYSIS, vol. 134, 1 April 2022 (2022-04-01), GB, pages 105987, XP055951474, ISSN: 1350-6307, DOI: 10.1016/j.engfailanal.2021.105987

## Description

### TECHNICAL FIELD

The present disclosure relates to a training method for a machine learning model intended to carry out corrosion estimations concerning a vehicle and to a corrosion estimating method for a vehicle intended to carry out such estimations.

Such methods are particularly useful to predict corrosion events in a vehicle based on vehicle usage and severity of the conditions it experiences, notably linked to weather conditions and salt exposure. They can be applied to cars or any other type of vehicle.

### TECHNOLOGICAL BACKGROUND

Corrosion undergone by parts of a vehicle is highly dependent on the vehicle usage and the conditions it undergoes. Particularly, corrosion is greatly influenced by the weather conditions and the presence of salt in the vehicle environment. For instance, rain, especially when accompanied by wind, and proximity to sea promote corrosion. Also, salt spread on the roads during snow events further promotes corrosion.

However, to date, these corrosion observations are mainly based on experience: particularly, no clear correlation has been found between the corrosion undergone by some part of the vehicles and objective data based on the weather conditions, the salt exposure and the vehicle usage. Therefore, for lack of a mathematical relationship linking corrosion with weather data, salt exposure and/or vehicle usage, corrosion predictions are very challenging to undertake. Document SONG XIAOXIAO ET AL: "Multi-factor mining and corrosion rate prediction model construction of carbon steel under dynamic atmospheric corrosion environment", ENGINEERING FAILURE ANALYSIS, vol. 134, 1 April 2022, page 105987 deals with a multi-factor mining and corrosion rate prediction model construction of carbon steel under dynamic atmospheric corrosion environment.

As a result, to date, the only reliable manner to prevent failures due to corrosion is to regularly inspect the vehicle. However, of course, most of these inspections are carried out as a precaution by non-technical people that are not skilled to understand severity of usage of a vehicle based on visual inspection. Alternatively, a skilled engineer would require a great number of inspections to link corrosion events to the severity of environment experienced by a vehicle, given the wide range of weather conditions, salt usage and vehicle usage in a single country. The efficiency of this method is therefore rather low.

As a result, there is a need for another method to predict corrosion events in a more reliable manner and on a large scale.

### SUMMARY OF THE INVENTION

The present invention relates to a training method for a machine learning model intended to carry out corrosion estimations about a vehicle, according to claim 1.

As a result, thanks to this training method, it is possible to record in a training database a whole history of weather conditions in the area of the vehicle and to associate with it, for each moment of this history, data about the corrosion actually undergone by said vehicle as measured by the corrosion sensor.

Thus, thanks to such a training database, it is possible to train a machine learning model to make it able, once the training completed, to carry out corrosion estimations on the basis of the weather conditions that the vehicle actually faces at the current moment. In this respect, it should be understood that the training database is supplied by one or several test vehicles which are equipped with one or several corrosion sensors but that, of course, the actual commercial vehicles are generally devoid of corrosion sensors: the trained machined learning model will therefore help to predict corrosion events for such commercial vehicles.

Of course, the more numerous are the sets of data in the training database, the more reliable will be the corrosion estimations made by the trained machine learning model. Also, because the method always determines the closest weather station to the vehicle, the accuracy of the weather data is increased.

In some embodiments, said several moments are set at a regular time interval, this time interval being comprised between 1 minute and 120 minutes, preferably comprised between 20 minutes and 60 minutes. These values constitute a good comprise between the need to have a great number of sets of data and the need to reduce the amount of redundant data so as to reduce the risk of overfitting. Also, such intervals are well adapted to prevent the battery of the corrosion sensor from being depleted too quickly.

In some embodiments, said several moments spread over at least one month, preferably over at least 3 months. Indeed, the longest the duration of the data collection, that is to say of the test phase, the more numerous and the more varied the collected data, which improves the training efficacy. Also, preferably, the test phase is carried out in winter, for instance from December to February. Indeed, the snow events are more likely to happen in winter so that the salt exposure is also more important in those months.

In some embodiments, the method comprises determining the moving state of the vehicle. Particularly, the moving state of the vehicle may be determined between at least two states: "still" and "moving".

In some embodiments, the moving state of the vehicle is recorded in the training database for at least some moments of said several moments, and preferably for each of them. The movement of the vehicle may indeed influence the corrosion phenomenon, as the vehicle experiences more salts due to splashing, particularly in winter periods.

In some embodiments, the step of determining the vehicle location is carried out only when the moving state of the vehicle is equal to "moving". For instance, when the moving state is equal to "still", the last known vehicle location is used to determine which weather station is the closest weather station.

In some embodiments, the method comprises determining the moving speed of the vehicle. The speed of the vehicle may indeed influence the corrosion phenomenon, particularly during rain.

In some embodiments, a data representative of the moving speed is recorded in the training database for at least some moments of said several moments, and preferably for each of them. This data is preferably the average moving speed over the last time interval. Alternatively, it could be the instantaneous moving speed at the time of the recorded moment.

In some embodiments, the method comprises determining the moving direction of the vehicle. The moving direction of the vehicle may indeed influence the corrosion phenomenon, particularly in relation with the wind direction.

In some embodiments, a data representative of the moving direction is recorded in the training database for at least some moments of said several moments, and preferably for each of them. This data is preferably the average moving direction over the last time interval. Alternatively, it could be the instantaneous moving direction at the time of the recorded moment.

In some embodiments, the closest weather station is selected in the weather station database among the weather stations which are available. An available weather station is a weather station which provides available and updated weather data. In the meaning of the present disclosure, the weather data are believed to be up to date if they have been updated in the last two hours, preferably in the last hour.

In some embodiments, the method comprises, when the time interval at which the weather data are available from the closest weather station is longer than the time interval of the training database, building intermediate weather data based on weather data actually retrieved from the closest weather station at other moments. For instance, these intermediate weather data can be interpolated on the basis of the previous and the next available weather data. Alternatively, the last available weather data can be reused until new weather data are available at the closest weather station.

In some embodiments, the weather data comprises the amount of precipitations. For instance, the amount of precipitation is the amount of precipitation from the last recorded moment. Indeed, rain is a factor having great influence on corrosion.

In some embodiments, the weather data comprises the wind speed. Indeed, wind may promote corrosion under certain circumstances, especially in relation with rain.

In some embodiments, the weather data comprises the wind direction. Indeed, the direction of the wind with respect to the vehicle may influence corrosion.

In some embodiments, the weather data comprises the cloud cover. Indeed, the inventors have identified a correlation between cloud cover and corrosion experienced by the vehicle.

In some embodiments, the weather data comprises the air pressure.

In some embodiments, the weather data comprises the air temperature.

In some embodiments, the corrosion sensor is configured to measure the free corrosion, the galvanic corrosion and/or the total free and galvanic corrosion. Particularly, the corrosion sensor may be configured to measure corrosion current.

In some embodiments, at least one corrosion sensor is attached on a part to be monitored of the vehicle. This helps to monitor the corrosion of a particular part which is for instance known to be particularly sensible to corrosion or which is particularly critical for the correct functioning of the vehicle. Of course, several corrosion sensors may be used to monitor different parts. For instance, the parts of interest may include stabilizer bars, coil springs, torsion beams, and more generally the underbody of vehicle.

In the invention, the vehicle is provided with a contamination sensor. Such a contamination sensor is particularly useful to detect, on some parts of the vehicle, the possible presence of contaminants which may promote corrosion. For instance, such a contamination sensor could be configured to detect and/or measure the concentration of salt (NaCl). Indeed, the vehicle can be contaminated by salt coming from the road surface, especially during snow events, or coming from the sea air when the vehicle drives near the sea shore, such contaminating salt then promoting corrosion of the exposed vehicle parts. This information may therefore help to train the machine learning model to estimate salt exposure, and therefrom corrosion, on the basis of the weather conditions and of the location of the vehicle, each region/country having its own habits regarding salt usage and salt type, and being more or less exposed to saline sea air.

In the invention, at least some contamination data retrieved from the contamination sensor are recorded in the training database for at least some moments of said several moments, and preferably for each of them. This data is preferably the conductance (in µS) of a reference solution involved in the contamination sensor, such a conductance being linked to the total concentration of contaminants at the time of the recorded moment.

In some embodiments, the vehicle is provided with a humidity sensor. Indeed, humidity may influence corrosion.

In some embodiments, a data representative of the humidity measured by the humidity sensor is recorded in the training database for at least some moments of said several moments, and preferably for each of them. This data is preferably the average humidity over the last time interval. Alternatively, it could be the instantaneous humidity at the time of the recorded moment.

In some embodiments, the vehicle is provided with a temperature sensor. Indeed, temperature may influence corrosion.

In some embodiments, a data representative of the temperature measured by the temperature sensor is recorded in the training database for at least some moments of said several moments, and preferably for each of them. This data is preferably the average temperature over the last time interval. Alternatively, it could be the instantaneous temperature at the time of the recorded moment.

In some embodiments, the machine learning model comprises an artificial neural network. For instance, this artificial neural network may comprise three neuron layers.

The present invention also relates to a corrosion estimating method for a vehicle, according to claim 10.

Thanks to such a corrosion estimating method, it is possible to estimate corrosion undergone by any vehicle on the basis of weather conditions actually faced by the vehicle. Particularly, it is possible to estimate the instantaneous corrosion undergone by the vehicle and, thus, to estimate the cumulative amount of corrosion undergone by the vehicle since its putting into service. As a result, it is possible to predict corrosion events and, thus, to anticipate the failure of some parts of the vehicle. Consequently, it is possible to plan a visual inspection of the vehicle in a garage only when the probability of a corrosion event is high enough: therefore, the number of inspections can be reduced.

In the invention, the machine learning model has been trained in accordance with the training method of any one of the above mentioned embodiments.

In some embodiments, the method comprises determining the moving state of the vehicle and inputting said moving state in the machine learning model.

In some embodiments, the method comprises determining the moving speed of the vehicle and inputting said moving speed in the machine learning model.

In some embodiments, the method comprises determining the moving direction of the vehicle and inputting said moving direction in the machine learning model.

In some embodiments, the weather data comprises the amount of precipitations.

In some embodiments, the weather data comprises the wind speed.

In some embodiments, the weather data comprises the wind direction.

In some embodiments, the weather data comprises the cloud cover.

In some embodiments, the weather data comprises the air pressure.

In some embodiments, the weather data comprises the air temperature.

In some embodiments, the weather data comprises the air humidity.

In some embodiments, the vehicle is provided with a humidity sensor and the humidity measured by the humidity sensor is inputted in the machine learning model.

In some embodiments, the vehicle is provided with a temperature sensor and the temperature measured by the temperature sensor is inputted in the machine learning model.

In some embodiments, the machine learning model comprises an artificial neural network. For instance, this artificial neural network may comprise three neuron layers.

In some embodiments, several sets of data corresponding to different moments are inputted in the machine learning model. Therefore, the machine learning model will output estimated corrosions data for each of these moments. For instance, such an estimation can be carried out at a regular time interval, preferably at least once a day.

In some embodiments, the method comprises estimating a cumulative corrosion amount undergone by the vehicle on the basis of the estimated corrosion data outputted by the machine learning model.

In some embodiments, the method comprises triggering a warning when the estimated cumulative corrosion amount exceeds a predetermined threshold.

The advantages of a corrosion estimating unit for a vehicle derive from the advantages described above with respect to the corrosion estimating method. Besides, this corrosion estimating unit may comprise any or all of the additional optional features described above with respect to the training method and/or the corrosion estimating method.

The present invention also relates to a computer program according to claim 11.

The above mentioned features and advantages, and others, will become apparent when reading the following detailed description of exemplary embodiments of the presented methods. This detailed description refers to the accompanying drawings.

### BRIEF DESCRIPTION OF THE DRAWINGS

The accompanying drawings are diagrammatic and seek above all to illustrate the principles of the invention.
Fig. 1 illustrates a test vehicle adapted to record test data.
Fig. 2 illustrates a fleet of several test vehicles distributed over a territory.
Fig. 3 illustrates an exemplary procedure enabling to build a training database from a test vehicle.
Fig. 4 illustrates an exemplary training of a machine learning model.
Fig. 5 illustrates a commercial vehicle for which corrosion estimations are desired.
Fig. 6 illustrates an exemplary corrosion estimation carried out by the machine learning model of Fig.4.

### DETAILED DESCRIPTION OF EMBODIMENTS

In order to make the invention more concrete, exemplary embodiments of a training method, a corrosion estimation method and a corrosion estimation unit are described in detail below with reference to the accompanying drawings. It should be recalled that the invention is not limited to these examples.

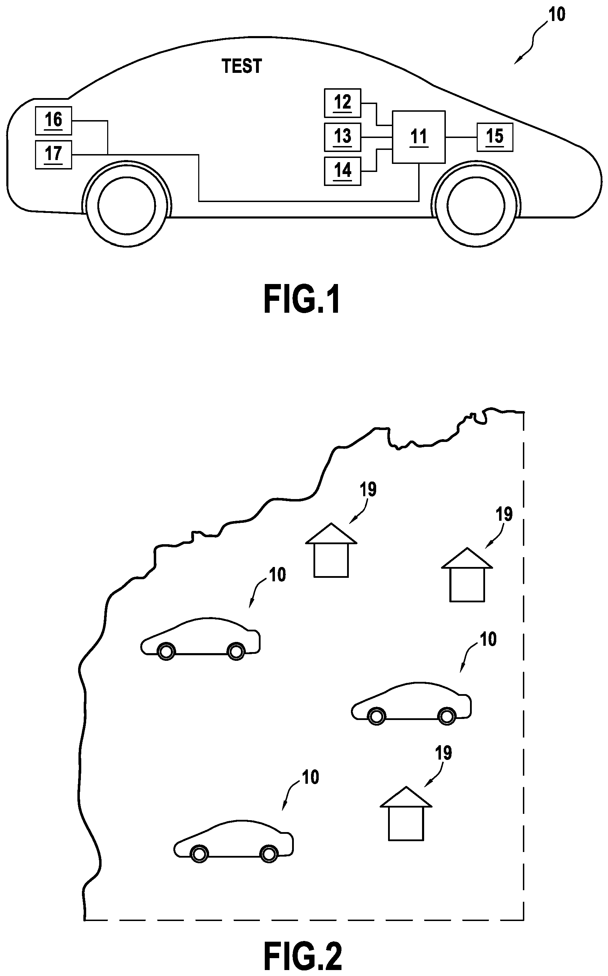

Fig. 1 illustrates a test vehicle 10 used for acquiring and recording test data. Such a test vehicle 10, like any regular vehicle, comprises a central electronic unit 11 which is connected to all the electronic components of the vehicle 10. Particularly, the central electronic unit 11 is able to monitor at any time the essential parameters of the vehicle 10.

First of all, the central electronic unit 11 monitors the state of the vehicle, that is to say whether the vehicle is locked, whether the accessories are on, whether the motor is running etc. Particularly, the central electronic unit 11 monitors the moving state MS of the vehicle, that is to say whether the vehicle is "moving" or "still".

The central electronic unit 11 also continuously monitors the moving speed V and the moving direction D of the vehicle 10. The moving direction D can be determined either by a specific sensor, such as an electronic compass, or thanks to a Global Positioning System (GPS) device 12.

Indeed, the test vehicle 10 includes such a GPS device 12 able to continuously determine the location L of the vehicle 10, this location L being generally expressed as geographic coordinates. This GPS device 12 is connected to the central electronic unit 11 and provides it at any time with the vehicle location L.

The test vehicle 10 also includes a temperature sensor 13 and a humidity sensor 14 provided on the body of the vehicle 10 so as to measure the air temperature T and the air humidity H around the vehicle 10. These sensors 13, 14 are connected to the central electronic unit 11 and provide it at any time with the measured air temperature T and air humidity H.

The test vehicle 10 also includes a communication device 15 connected to the central electronic unit 11 and configured to communicate with a wireless network, for instance with the Internet network. Therefore, through the communication device 15, the central electronic unit 11 is able to send and receive data to and from external servers.

The test vehicle 10 also includes a corrosion sensor 16 provided on a part of interest of the vehicle. For instance, such a corrosion sensor 16 can be attached to the underbody of the vehicle. Such a corrosion sensor 16 has a lamellar-like configuration with two different materials, separated by dielectric layers and connected to two different electrodes. However, of course, other types of corrosions sensors may be used, for instance a sensor assessing the resistance of a filament and correlating it with thickness loss caused by corrosion.

Such a corrosion sensor 16 is therefore able to measure the free corrosion FC, expressed in µA, using the linear polarization resistance method: a signal of 10mV is sent to the electrodes at a certain frequency and the response is recorded, said response depending on the ease to oxidize, that is to say to corrode, the electrodes.

Such a corrosion sensor 16 is also able to measure the galvanic corrosion GC, expressed in µA, using the zero resistance ammeter method: the actual current flowing from one material to the other, due to galvanic coupling, being thus measured.

Also, the corrosion sensor 16 is able to measure the total corrosion TC, as the sum of the free corrosion FC and the galvanic corrosion GC.

More generally, the test vehicle 10 may include several corrosion sensors 16 of this type, provided on different parts of the vehicle 10.

The test vehicle 10 also includes a contamination sensor 17 preferably provided close to the corrosion sensor 16. Such a contamination sensor 17 is a gold sensor configured to measure the conductance of a solution, this conductance being directly correlated with salt concentration in said solution. For example, an excitation voltage of 10 mV is sent to the gold electrode so as to calculate the conductance. The contamination sensor 17 is therefore able to measure the conductance C which is representative of the contamination of the surfaces of the vehicle 10. These contaminants may include salt species, and especially NaCl, MgCl₂ or CaCl₂, or other organic de-icing compounds, for instance glycols. This conductance may for instance be expressed in µS.

More generally, the test vehicle 10 may include several contamination sensors 17 of this type, provided on different parts of the vehicle 10.

In the present example, the corrosion sensor 16 and the contamination sensor 17 are connected to the central electronic unit 11 which may record their measures in a centralized memory. However, alternatively, the corrosion sensor 16 and/or the contamination sensor 17 could be autonomous and record their measures in a local memory retrieved at the end of the testing phase.

During the test phase, several test vehicles 10 of this type are provided. They are intended to drive normally on the public road, in realistic conditions. For instance, these test vehicles 10 can be entrusted to volunteers who are tasked to use these test vehicles 10 in their everyday life or, else, the personal vehicles of these volunteers can be specially equipped to act as test vehicles 10 during the test phase. Preferably, the test vehicles 10 are distributed in several regions or countries, having different climates.

As depicted on Fig. 2, these regions or countries should comprise weather stations 19 broadcasting weather data in a regular and updated fashion: for instance, these weather stations 19 should broadcast updated weather data at least on an hourly basis. The list of these weather stations 19 is saved in a weather station database in association with their locations, that is their geographic coordinates. This weather station database may also mention whether a given weather station is available, that is to say is currently broadcasting weather data, or rather is temporary unavailable.

Each weather station 19 may provide different types of weather data. However, it is preferred that they provide at least the amount of precipitations AP over the last measurement period; the average speed WS and direction WD of the wind over the last measurement period; the average cloud cover CC over the last measurement period; and the average air pressure P over the last measurement period.

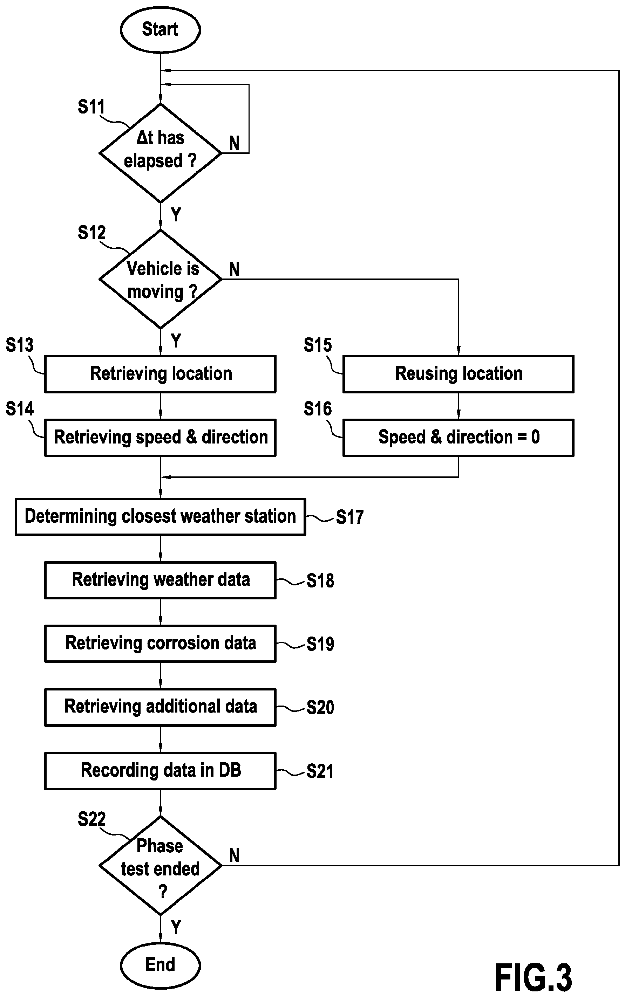

The proceedings of the test phase will now be explained in reference to Fig. 3. The objective of this test phase is to build a training database 20 enclosing a large number of sets of data associating corrosion data with usage data and weather data. Fig. 3 therefore presents how these sets of data are built and recorded with respect to a given test vehicle 10. In the present example, it is assumed that the procedure of Fig. 3 is carried out by the central electronic unit 11 of the considered test vehicle 10.

In a first step S11, the central electronic unit 11 wait until a predetermined amount of time has elapsed. This amount of time actually corresponds to the time interval Δt used in the training database 20. In the present example, this time interval is equal to 30 minutes.

When this time interval Δt has elapsed, the central electronic unit 11 checks in a step S12 the moving state MS of the test vehicle 10.

If the moving state MS is "moving", the central electronic unit 11 retrieves in a step S13 the vehicle location L thanks to the GPS device 12. Then, in a step S14, the central electronic unit 11 retrieves the moving speed V and the moving direction D of the test vehicle 10. More specifically, in the present example, the central electronic unit 11 retrieve the average moving speed V and the average moving direction D over the last time interval Δt.

However, if the moving state MS is "still", the central electronic unit 11 does not interrogate the GPS device 12 but reuses the last location L known by the central electronic unit 11 (step S15). Then, null values are saved as moving speed V and moving direction D (step S16).

Then, in both cases, in step S17, the central electronic unit 11 determines which weather station 19 is the closest to the test vehicle 10 by comparing the vehicle location L with the locations of the weather stations 19 as recorded in the weather station database.

Then, in step S18, the central electronic unit 11 retrieves the weather data currently broadcasted by the closest weather station 19, and particularly the amount of precipitations AP, the speed WS and direction WD of the wind, the cloud cover CC and the air pressure P.

As this occasion, the central electronic unit 11 may condition the brut weather data retrieved from the closest weather station to adapt them to the formats used in the training database 20. Particularly, when the measurement period of the weather station is longer than the time interval Δt of the training database 20, the central electronic unit 11 may extrapolate the weather data in order to build intermediate values to be recorded in the training database 20. Also, the amount of precipitations AM may be recalculated in order to match the time interval Δt of the training database 20.

Then, in step S19, the central electronic unit 11 retrieves the corrosion data supplied by the corrosion sensor 16, that is to say the free corrosion current FC and the galvanic corrosion current GC. In this respect, it is clarified that the corrosion sensor 16 may provide corrosion data at a more frequent interval, and even when the vehicle is not used; however, only the corrosion data measured at the time of the current sample will be retrieved for the purpose of building the database 20.

Then, in step S20, the central electronic unit 11 may retrieve additional data, such as the temperature value T provided by the temperature sensor 13, the humidity value H provided by the humidity sensor 14 and/or the conductance value C provided by the contamination sensor 17.

Then, in step S21, the central electronic unit 11 records a new set of data in the training database 20, this set of data associating the usage data (including the location L, the vehicle speed V and the moving direction D), the weather data (including the amount of precipitation AP, the speed WS and direction WD of wind, the cloud cover CC and the air pressure P) with the corrosion data (including the free corrosion FC and the galvanic corrosion GC) and possible additional data (including the temperature T, the humidity H and the contamination C).

These steps are then repeated until the test phase is ended (Step S22). Particularly, this test phase may be ended after a predetermined period or when the training database 20 is deemed satisfactory, that is to say is large enough and varied enough.

Of course, it should be understood that the actual training database 20 is formed by the sum of the sets of data recorded by each test vehicle 10. In this regard, the training database 20 may be host by a centralized server and completed simultaneously by each test vehicle 10 or, else, may be formed at the end of the test phase by merging all the individual databases built by each of the test vehicles 10.

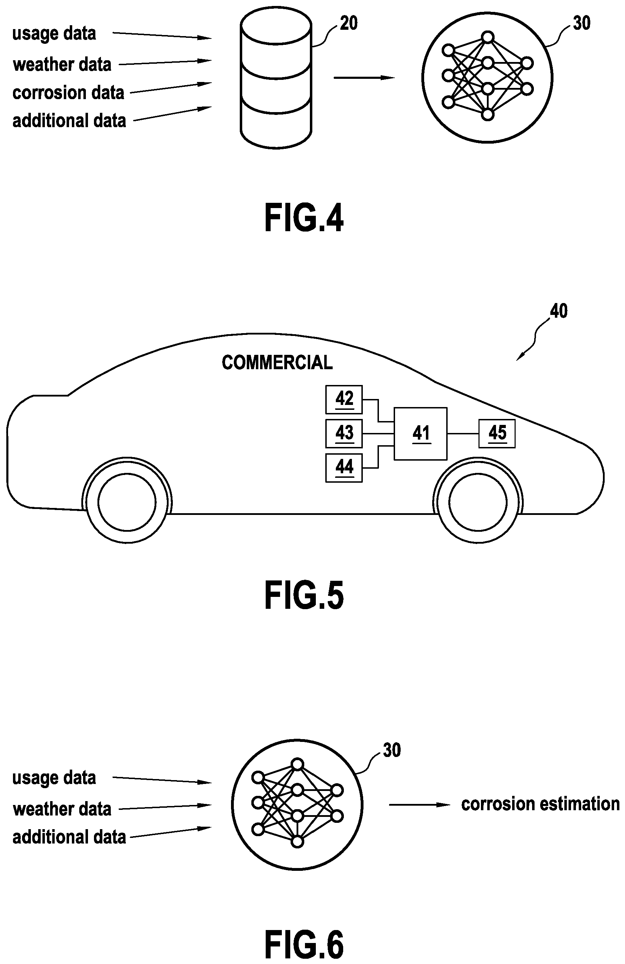

In any case, as depicted on Fig. 4, once the test phase is completed, a machine learning model 30 is trained on the training database 20 thus built. In the present example, this machine learning model 30 is an artificial neural network of the type "inputs-64-64-64-output", with "relu" as activation function, mean absolute error as loss function and back propagated error.

Once the training phase is completed, the machine learning model 30 can be used to carry out corrosion estimations. The machine learning model 30 thus trained may therefore be implemented in the central electronic unit 41 of commercial vehicles 40: in such a case, the central electronic unit 41 acts as a corrosion estimating unit. Or else, the machine learning model 30 may be available on a centralized server which can communicate with the eligible commercial vehicles 40 thanks to their communication device 45.

As depicted on Fig. 5, a commercial vehicle 40 is a vehicle sold to and used by final users. Therefore, it includes the same standard components as the test vehicles 10, that is to say notably a central electronic unit 41, a GPS device 42, a temperature sensor 43, a humidity sensor 44 and a communication device 45. Conversely, a commercial vehicle 40 is not supposed to comprise specific sensors such as corrosion sensors and/or contamination sensors.

Now, when a corrosion estimation is wished, the central electronic units 41 of these commercial vehicles 40 may determine which weather station 19 is the closest to the vehicle 40, in the same as way as described above with respect to the test vehicle 10, and retrieve the local weather data. The central electronic units may then input into the machine learning model 30 these local weather data together with the usage data (including moving speed V and direction D) and possible additional data (including temperature T and humidity H): the model 30 then outputs a estimation of the instantaneous corrosion undergone by the commercial vehicle 40. This estimation can relate to the free corrosion and/or the galvanic corrosion, both expressed in µA, or total free corrosion and/or total galvanic corrosion, both expressed in C.

Alternatively, this corrosion estimation may be carried out externally: in such a case, the central electronic unit 41 may simply forward the usage data together with the vehicle location L to an external centralized server, then this server determines which is the closest weather station, retrieves the local weather data and interrogates the model 30 as explained above.

In both cases, corrosion estimations may be carried out for each commercial vehicle 40 eligible to this service, for instance on a daily basis, in order to estimate a cumulative corrosion amount undergone by the commercial vehicle 40 since its putting into service. This cumulative corrosion amount may be expressed in coulombs (C). Then, if a predetermined threshold is exceeded, a warning is issued to the driver to ask him or her to plan an inspection in a garage.

Even if the present invention has been described with regard to particular exemplary embodiments, it is clear that these examples may be modified without departing from the scope of the invention as defined by the claims. Particularly, individual features of different presented embodiments can be combined in additional embodiments. As a result, the description and the drawings shall be considered in an illustrative way rather than a limitative way.

It is also clear that all the features described with reference to a method are transposable, individually or in combination, to a device, and vice versa.

## Claims

1. A computer-implemented training method for a machine learning model intended to carry out corrosion estimations about a vehicle,
wherein at least one vehicle (10) is equipped with at least one corrosion sensor (16),
wherein the vehicle (10) is provided with a contamination sensor (17) configured to measure a conductance which is representative of a contamination of at least one surface of the vehicle (10),
the method comprising:
determining the location of the vehicle (10) by means of a GPS device (12) provided in the vehicle (10),
determining, in a weather station database, which weather station (19) is the closest to the location of the vehicle (10),
retrieving at least some weather data from said closest weather station (19),
retrieving at least some corrosion data from said at least one corrosion sensor (16),
retrieving at least some contamination data from the contamination sensor (17),
building a training database (20) associating, for several moments over at least ten days, said corrosion data with said weather data,
recording at least some contamination data in the training database (20) for at least some moments of said several moments, and
training the machine learning model (30) on the training database (20) thus built, wherein the weather data and the contamination data are used as input training data, and the corrosion data are used as target output training data.

2. The training method of claim 1, wherein said several moments are set at a regular time interval (Δt), this time interval (Δt) being comprised between 1 minutes and 120 minutes, preferably comprised between 20 minutes and 60 minutes.

3. The training method of claim 1 or 2, comprising determining the moving state of the vehicle (10),
wherein the step of determining the location of the vehicle (10) is carried out only when the moving state of the vehicle (10) is equal to "moving".

4. The training method of any one of claims 1 to 3, comprising determining the moving speed of the vehicle (10),
wherein a data representative of the moving speed is recorded in the training database (20) for at least some moments of said several moments, and preferably for each of them.

5. The training method of any one of claims 1 to 4, comprising, when the time interval at which the weather data are available from the closest weather station (19) is longer than the time interval (Δt) of the training database (20), building intermediate weather data based on weather data actually retrieved from the closest weather station (19) at other moments.

6. The training method of any one of claims 1 to 5, wherein the weather data comprises the amount of precipitations.

7. The training method of any one of claims 1 to 6, wherein the weather data comprises the wind speed and/or the wind direction.

8. The training method of any one of claims 1 to 7, wherein the vehicle (10) is provided with a humidity sensor (13) and a temperature sensor (14), and
wherein a data representative of the humidity measured by the humidity sensor (13) and a data representative of the temperature measured by the temperature sensor (14) are recorded in the training database for at least some moments of said several moments, and preferably for each of them.

9. The training method of any one of claims 1 to 8, wherein the machine learning model (30) comprises an artificial neural network.

10. A computer-implemented corrosion estimating method for a vehicle, comprising
training a machine learning model (30) in accordance with any one of claims 1 to 9,
determining the location of the vehicle (40) by means of a GPS device (42) provided in the vehicle (40),
determining, in a weather station database, which weather station (19) is the closest to the location of the vehicle (40),
retrieving at least some weather data from said closest weather station (19),
inputting in the machine learning model (30) said weather data and retrieving from said machine learning model (30) estimated corrosion data.

11. Computer program comprising instructions for executing the steps of the training method of claim 1 or of the corrosion estimating method of claim 10 when the program is executed by a computer.

## Patentansprüche

1. Computerimplementiertes Trainingsverfahren für ein maschinelles Lernmodell, das dazu bestimmt ist, Korrosionsschätzungen bei einem Fahrzeug durchzuführen,
wobei mindestens ein Fahrzeug (10) mit mindestens einem Korrosionssensor (16) ausgestattet ist,
wobei das Fahrzeug (10) mit einem Kontaminationssensor (17) versehen ist, der konfiguriert ist, um einen Leitwert zu messen, der repräsentativ für eine Kontamination von mindestens einer Oberfläche des Fahrzeugs (10) ist,
das Verfahren umfassend:
Bestimmen des Standorts des Fahrzeugs (10) mittels einer GPS-Vorrichtung (12), die in dem Fahrzeug (10) bereitgestellt ist,
Bestimmen, in einer Wetterstationdatenbank, welche Wetterstation (19) dem Standort des Fahrzeugs (10) am nächsten ist,
Abrufen zumindest einiger Wetterdaten von der nächstgelegenen Wetterstation (19),
Abrufen mindestens einiger Korrosionsdaten von dem mindestens einen Korrosionssensor (16),
Abrufen zumindest einiger Kontaminationsdaten von dem Kontaminationssensor (17),
Aufbauen einer Trainingsdatenbank (20), die für mehrere Zeitpunkte über mindestens zehn Tage die Korrosionsdaten mit den Wetterdaten assoziiert,
Aufzeichnen von zumindest einigen Kontaminationsdaten in der Trainingsdatenbank (20) für zumindest einige Zeitpunkte der mehreren Zeitpunkte, und
Trainieren des maschinellen Lernmodells (30) auf der somit aufgebauten Trainingsdatenbank (20), wobei die Wetterdaten und die Kontaminationsdaten als Eingangstrainingsdaten und die Korrosionsdaten als Ziel-Ausgangstrainingsdaten verwendet werden.

2. Trainingsverfahren nach Anspruch 1, wobei die mehreren Zeitpunkte in einem regelmäßigen Zeitintervall (Δt) festgelegt werden, wobei dieses Zeitintervall (Δt) zwischen 1 Minute und 120 Minuten, vorzugsweise zwischen 20 Minuten und 60 Minuten, liegt.

3. Trainingsverfahren nach Anspruch 1 oder 2, umfassend ein Bestimmen des Bewegungszustands des Fahrzeugs (10),
wobei der Schritt eines Bestimmens des Standorts des Fahrzeugs (10) nur durchgeführt wird, wenn der Bewegungszustand des Fahrzeugs (10) gleich "in Bewegung" ist.

4. Trainingsverfahren nach einem der Ansprüche 1 bis 3, umfassend ein Bestimmen der Bewegungsgeschwindigkeit des Fahrzeugs (10),
wobei in der Trainingsdatenbank (20) Daten, die repräsentativ für die Bewegungsgeschwindigkeit sind, für mindestens einige Zeitpunkte der mehreren Zeitpunkte, und vorzugsweise für jeden davon, aufgezeichnet werden.

5. Trainingsverfahren nach einem der Ansprüche 1 bis 4, umfassend, wenn das Zeitintervall, in dem die Wetterdaten von der nächstgelegenen Wetterstation (19) verfügbar sind, länger ist als das Zeitintervall (Δt) der Trainingsdatenbank (20), ein Aufbauen von Zwischen-Wetterdaten basierend auf Wetterdaten, die zu anderen Zeitpunkten tatsächlich von der nächstgelegenen Wetterstation (19) abgerufen werden.

6. Trainingsverfahren nach einem der Ansprüche 1 bis 5, wobei die Wetterdaten die Menge an Niederschlägen umfassen.

7. Trainingsverfahren nach einem der Ansprüche 1 bis 6, wobei die Wetterdaten die Windgeschwindigkeit und/oder die Windrichtung umfassen.

8. Trainingsverfahren nach einem der Ansprüche 1 bis 7, wobei das Fahrzeug (10) mit einem Feuchtigkeitssensor (13) und einem Temperatursensor (14) versehen ist, und
wobei in der Trainingsdatenbank für mindestens einige Zeitpunkte der mehreren Zeitpunkte und vorzugsweise für jeden davon Daten, die repräsentativ für die von dem Feuchtigkeitssensor (13) gemessene Feuchtigkeit sind, und Daten, die repräsentativ für die von dem Temperatursensor (14) gemessene Temperatur sind, aufgezeichnet werden.

9. Trainingsverfahren nach einem der Ansprüche 1 bis 8, wobei das maschinelle Lernmodell (30) ein künstliches neuronales Netz umfasst.

10. Computerimplementiertes Korrosionsschätzverfahren für ein Fahrzeug, umfassend
Trainieren eines maschinellen Lernmodells (30) nach einem der Ansprüche 1 bis 9,
Bestimmen des Standorts des Fahrzeugs (40) mittels einer GPS-Vorrichtung (42), die in dem Fahrzeug (40) bereitgestellt ist,
Bestimmen, in einer Wetterstationdatenbank, welche Wetterstation (19) dem Standort des Fahrzeugs (40) am nächsten ist,
Abrufen zumindest einiger Wetterdaten von der nächstgelegenen Wetterstation (19),
Eingeben der Wetterdaten in das maschinelle Lernmodell (30) und Abrufen der geschätzten Korrosionsdaten von dem maschinellen Lernmodell (30).

11. Computerprogramm, umfassend Anweisungen zum Ausführen der Schritte des Trainingsverfahrens nach Anspruch 1 oder des Korrosionsschätzverfahrens nach Anspruch 10, wenn das Programm von einem Computer ausgeführt wird.

## Revendications

1. Procédé d'entraînement mis en œuvre par ordinateur pour un modèle d'apprentissage de machine prévu pour réaliser des estimations de corrosion concernant un véhicule,
au moins un véhicule (10) étant équipé de au moins un capteur de corrosion (16),
le véhicule (10) étant pourvu d'un capteur de contamination (17) configuré pour mesurer une conductibilité qui est représentative d'une contamination de au moins une surface du véhicule (10),
le procédé comprenant le fait de :
déterminer l'emplacement du véhicule (10) au moyen d'un dispositif GPS (12) prévu dans le véhicule (10),
déterminer, dans une base de données de station météorologique, quelle station météorologique est la plus proche de l'emplacement du véhicule (10),
récupérer au moins quelques données météorologiques de ladite station météorologique la plus proche (19),
récupérer au moins quelques données de corrosion dudit au moins un capteur de corrosion (16),
récupérer au moins quelques données de contamination du capteur de contamination (17),
construire une base de données d'entraînement (20) associant, pour plusieurs moments sur au moins dix jours, lesdites données de corrosion et lesdites données météorologiques,
enregistrer au moins quelques données de contamination dans la base de données d'entraînement pour au moins quelques moments desdits plusieurs moments, et
entraîner le modèle d'apprentissage de machine (30) sur la base de données d'entraînement (20) ainsi construite, les données météorologiques et les données de contamination étant utilisées en tant que données d'entraînement d'entrée, et les données de corrosion étant utilisées en tant que données d'entraînement de sortie de cible.

2. Procédé d'entraînement selon la revendication 1, selon lequel lesdits plusieurs moments sont établis à un intervalle de temps régulier (Dt), cet intervalle de temps (Dt) étant compris entre 1 minute et 120 minutes, de préférence compris entre 20 minutes et 60 minutes.

3. Procédé d'entraînement selon la revendication 1 ou 2, comprenant le fait de déterminer l'état de déplacement du véhicule (10),
l'étape de détermination de l'emplacement du véhicule (10) étant réalisée seulement quand l'état de déplacement du véhicule (10) est égal à « en déplacement ».

4. Procédé d'entraînement selon l'une quelconque des revendications 1 à 3, comprenant le fait de déterminer la vitesse de déplacement du véhicule (10),
des données représentatives de la vitesse de déplacement étant enregistrées dans la base de données d'entraînement (20) pour au moins quelques moments desdits plusieurs moments, et de préférence pour chacun d'eux.

5. Procédé d'entraînement selon l'une quelconque des revendications 1 à 4, comprenant, quand l'intervalle de temps où les données météorologiques sont disponibles à partir de la station météorologique la plus proche (19) est plus long que l'intervalle de temps (Dt) de la base de données d'entraînement (20), la construction de données météorologiques intermédiaires basées sur des données météorologiques réellement récupérées à partir de la station météorologique la plus proche (19) à d'autres moments.

6. Procédé d'entraînement selon l'une quelconque des revendications 1 à 5, selon lequel les données météorologiques comprennent la quantité de précipitations.

7. Procédé d'entraînement selon l'une quelconque des revendications 1 à 6, selon lequel les données météorologiques comprennent la vitesse du vent et/ou la direction du vent.

8. Procédé d'entraînement selon l'une quelconque des revendications 1 à 7, selon lequel le véhicule (10) est pourvu d'un capteur d'humidité (13) et d'un capteur de température (14), et
selon lequel des données représentatives de l'humidité mesurée par le capteur d'humidité (13) et des données représentatives de la température mesurée par le capteur de température (14) sont enregistrées dans la base de données d'entraînement pour au moins quelques moments desdits plusieurs moments, et de préférence pour chacun d'eux.

9. Procédé d'entraînement selon l'une quelconque des revendications 1 à 8, selon lequel le modèle d'apprentissage de machine (30) comprend un réseau neuronal artificiel.

10. Procédé d'estimation de corrosion mis en œuvre par ordinateur pour un véhicule, comprenant le fait de
entraîner un modèle d'apprentissage de machine (30) selon l'une quelconque des revendications 1 à 9,
déterminer l'emplacement du véhicule (40) au moyen d'un dispositif GPS (42) prévu dans le véhicule (40),
déterminer, dans une base de données de station météorologique, quelle station météorologique (19) est la plus proche de l'emplacement du véhicule (40),
récupérer au moins quelques données météorologiques de ladite station météorologique la plus proche (19),
entrer dans le modèle d'apprentissage de machine (30) lesdites données météorologiques et récupérer des données de corrosion estimées à partir dudit modèle d'apprentissage de machine (30).

11. Programme informatique comprenant des instructions pour exécuter les étapes du procédé d'entraînement selon la revendication 1 ou du procédé d'estimation de corrosion selon la revendication 10 quand le programme est exécuté par un ordinateur.
